# EUROPEAN PATENT APPLICATION

(11) **EP 2 258 759 A1**
(43) Date of publication of application: **08.12.2010**
(21) Application number: 10173637.9
(22) Date of filing: 07.03.2006
(51) Int. Cl.: C08K 5/00, C08K 5/3492, C08K 5/3435

(54) **Compositions for Preventing the Photodecomposition**

(30) Priority: 07.04.2005 US 669119 P
(62) Divisional of application: 06737307.6
(71) Applicant: CYTEC TECHNOLOGY CORP., Wilmington, Delaware 19801 (US)
(72) Inventor: Zenner, John Mathew, Fairfield, CT 06430 (US)
(74) Representative: Deckers, Hellmuth Alexander

(57) **Abstract**

A light stabilisation additive composition comprising at least one ortho hydroxy tris-aryl triazine light absorber and at least one low molecular weight HALS having a molecular weight less than about 500 and optionally an oligomeric HALS, wherein the weight ratio of HALS to triazine light absorber is from about 1:1 to about 20:1

## Description

### FIELD OF THE INVENTION

The invention is directed to compositions and their use in protecting cyclic olefin copolymeric materials from ultraviolet radiation or light ("UV light"). In particular, the invention relates to compositions comprising synergistic combinations of at least one ortho-hydroxy tris-aryl-triazine UV light absorber and at least one low molecular weight hindered amine light stabilisers ("HALS"). The composition can further comprise at least one oligomeric HALS.

### BACKGROUND OF THE INVENTION

Recently, several companies have introduced a line of cyclic olefin copolymers with ethylene (COP). These materials have excellent optical properties, higher UV transmission than acrylic or polycarbonate, good dimensional stability, good heat deflection and good oxygen and water barrier properties. Among the possible applications for these COP materials are lenses for data storage/retrieval systems, light diffusers and light guides for LCD's and housings for HID lamps. However, COP's are limited in many of these applications because of poor light stability.

It is well-known that ultraviolet (UV) light or radiation, particularly from sunlight, can degrade polymers such as COPs, often resulting in embrittlement, yellowing or hazing. However, this degradation can be inhibited by the incorporation of ultra-violet light stabilisers and ultra-violet light absorbers in or on articles made from the polymers.

For example, the use of HALS and UV light absorbers ("UVA"), both individually and in combination, to stabilise polymeric materials is generally known in the art. In particular, UV light absorbers such as benzotriazoles and benzophenones were initially used to stabilise polymeric materials, and to prevent the degradation of such materials from exposure to UV light. Later, it was discovered that HALS, which scavenge free radicals formed in the polymeric material when exposed to UV light, were more effective than UV light absorbers, and thus, UV light absorbers are presently used in combination with at least one HALS in most conventional applications.

U.S. Patent No. 4,619,956 discloses a method of stabilising a polyolefin polymer film, coating, or molded article against the action of light, moisture, and oxygen. The method comprises incorporating a HALS and a tris-aryl-2-triazine UV light absorber into the polymer. Each of the UV light absorbers and HALS are used in an amount of from about 0.01 to about 5 percent by weight, but only formulations having equal amounts of UV light absorber and HALS are exemplified. The compositions are said to be effective in stabilising the polymeric material, which does not begin to lose gloss or turn yellow until after about 1,000 to about 2,400 hours of exposure to UV light.

U.S. Patent No. 4,331,586 to Hardy discloses oligomers for use as light stabilisers. While providing protection for polymeric materials such as polypropylene, polymeric films containing the disclosed oligomeric HALS became brittle after exposure to UV light for about 1,700 hours.

Therefore, a need remains for compositions and methods of use thereof that stabilise polymeric materials, especially cyclic olefin copolymers and provide protection from exposure to UV light for extended periods of time. The present invention provides such methods and compositions.

### SUMMARY OF THE INVENTION

The present invention is directed to UV stabilised cyclic olefin polymers and articles made therefrom, such as data storage/retrieval systems, light diffusers and light guides for LCD's and housings for HID lamps. The article according to the present invention comprises a cyclic olefin polymeric material, from about 50 to about 5,000 ppm of at least one ortho hydroxy tris-aryl triazine light absorber and from about 500 ppm to about 1.25 percent of at least one low molecular weight HALS having a molecular weight of less than about 500, wherein the weight ratio of HALS to triazine is from about 3:1 to about 20:1, preferably, from about 5:1 to about 10:1, and most preferably from about 6:1 to about 7.5:1. Preferably, the polymeric article is a molded or extruded article having a thickness of no less than about 1 mm.

Low molecular weight HALS useful in the present invention are mono or difunctional HALS having a molecular weight less than about 500 and include, but are not limited to: 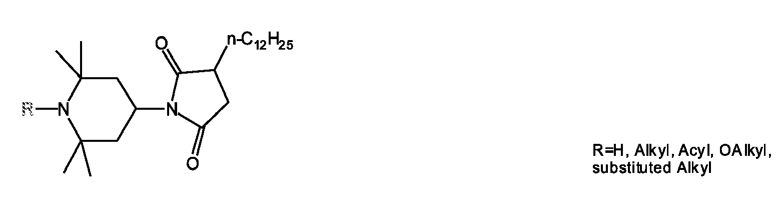 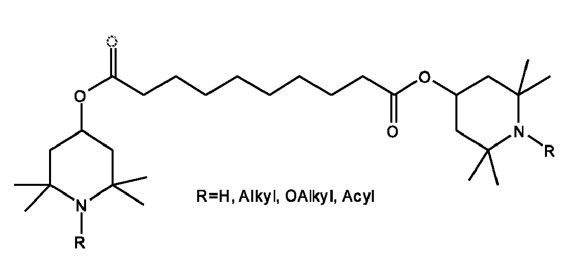 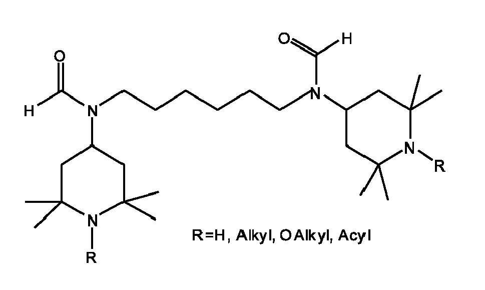 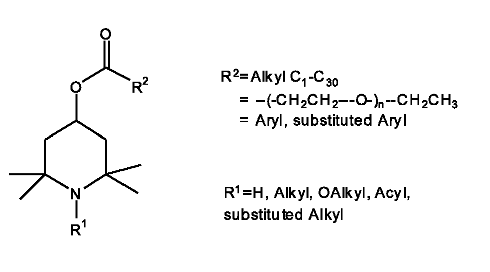 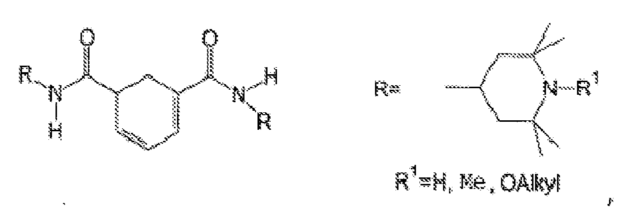 Bis(1-octyloxy-2,2,6,6,tetramethyl-4-piperidinyl)sebacate, and dimethyl succinate polymer with 4-hydroxy-2,2,6,6-tetramethyl-1-piperidineethanol.

Oligomeric HALS useful as the third optional component in the invention which are present in a mass fraction of from 20 ppm to 5000 ppm in the polymeric article include, but are not limited to oligomers of formula (I) 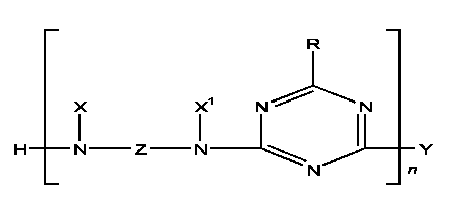 wherein R is morpholino, C₁-C₈ alkylamine, di(C₁-C₈) alkylamine, pyrrolidyl, or cyclohexylamine, X and X¹, which are the same or different, and are hydrogen, C₁-C₂₀ alkyl, or a radical of formula (II) 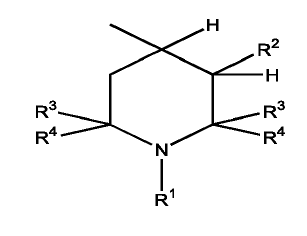 wherein R¹ represents hydrogen, C₂-C₃ hydroxyalkyl, C₁-C₈ alkyl, acyl, alkoxyl, hydroxyl, or oxyl; R² represents hydrogen, C₁-C₈ alkyl, or benzyl; R³ and R⁴, are the same or different, and are C₁-C₈ alkyl, benzyl, or phenethyl, or from a C₅-C₁₀ cycloalkyl; Z is a straight chained or branched C₂-C₂₀ alkylene or a straight chained or branched C₂-C₂₀ alkylene chain interrupted by at least oxy, thio, or 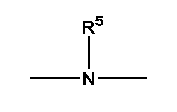 radical, wherein R⁵ is hydrogen, C₁-C₂₀ alkyl, or the radical of formula (II); C₅-C₁₀ cycloalkylene, 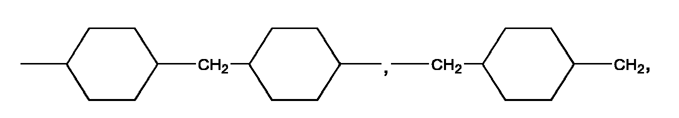 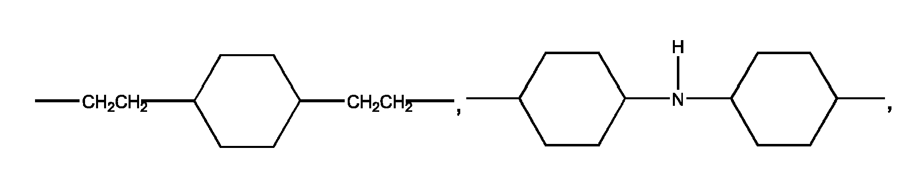 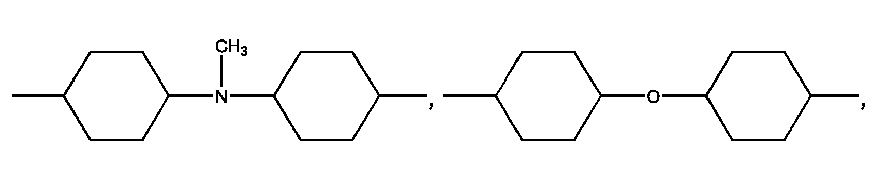 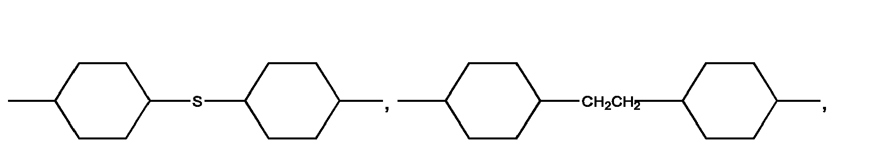 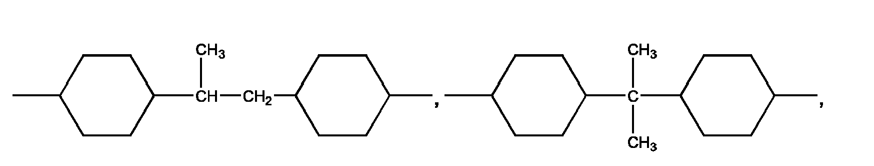 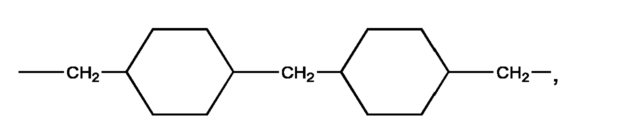 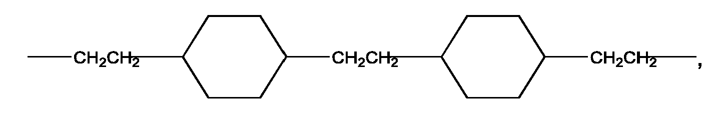 or 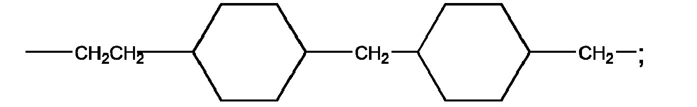 C₆-C₁₂ arylene, or C₈-C₁₄ aralkylene; n is an integer greater than 1; and Y is a halogen atom, C₁-C₈ alkylamine, di(C₁-C₈) alkylamine, pyrrolidyl, morpholino, cyclohexylamine, or 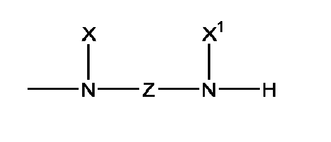 wherein X, X¹, and Z are as previously defined; with the proviso that at least one of X and X¹ is of formula (II). Most preferably, X and X¹ are the same or different, and are of formula (II), wherein R is morpholino or octylamine, R¹ is H or CH₃, R² is H, R³ and R⁴ are CH₃, Z is C₆H₁₂, and Y is morpholino, octylamine, or 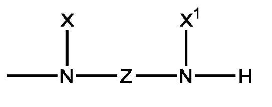 wherein X, X¹, and Z are as previously defined.

Typically, the triazine light absorber is of formula (III) 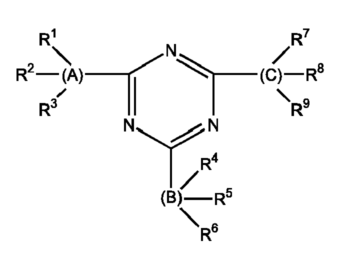 wherein 2 or 3 of A, B and C are aromatic, at least one of A, B and C is substituted by a hydroxy group ortho of the point of attachment to the triazine ring, and each of R¹ through R⁹ is selected from the group consisting of hydrogen, hydroxy, alkyl, alkoxy, sulfonic, carboxy, halo, haloalkyl and acylamino. Preferably, the triazine light absorber is of formula (IV) 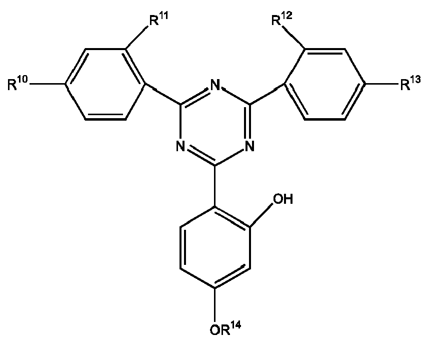 where R¹⁰, R¹¹, R¹² and R¹³ are the same or different, and are individually selected from the group consisting of hydrogen, hydroxy, alkyl, alkoxy, sulfonic, carboxy, halo, haloalkyl and acylamino, and R¹⁴ is hydrogen or C₁ to C₁₈ alkyl. Most preferably, R¹⁰, R¹¹, R¹² and R¹³ are H or CH₃, and R¹⁴ is hydrogen, C₅H₁₃, or C₈H₁₇.

Other useful triazine light absorbers include, but are not limited to 2-(4,6-diphenyl-1,3,5-triazine-2-yl)-5-(hexyl)oxy-phenol,
2-(4-((2-hydroxy-3-dodecyloxypropyl)-oxyl-2-hydroxyphenyl)-4,6-bis(2,4-dimethylphenyl)-1,3,
5-triazine, 2-(4-((2-hydroxy-3-tridecyloxypropyl)-oxyl-2-hydroxyphenyl)-4,6-bis(2,4-dimethylphenyl)-1,3,5-triazine,
2-(4-((2-hydroxy-3-tridecyloxypropyl)-oxyl-2-hydroxyphenyl)-4,6-bis(2,4-dimethylphenyl)-1,3,5-triazine, and
2-(4-((2-hydroxy-3-isooctyloxypropyl)-oxyl-2-hydroxyphenyl)-4,6-bis(2,4-dimethylphenyl)-1,3, 5-triazine, and blends thereof.

Preferably, the light stabilised polymeric article is formed from a copolymer, and most preferably from a cyclic olefin copolymer and can be a product of polymerization in accordance with the following: 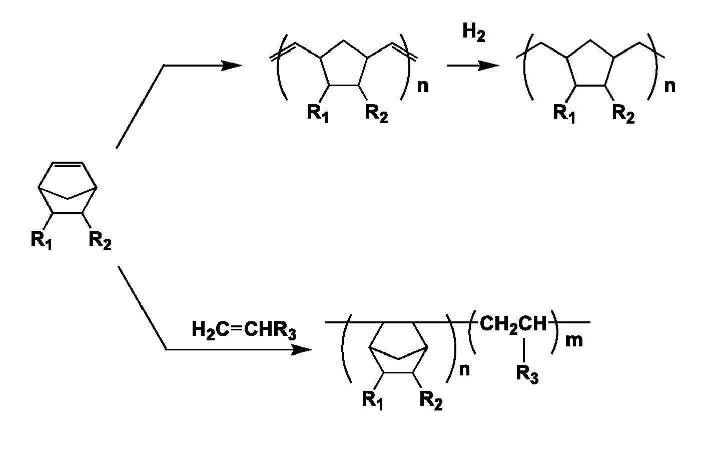 wherein R 1, R2, R3 are H.
Cyclic olefin polymers useful in the present invention include but are not limited to

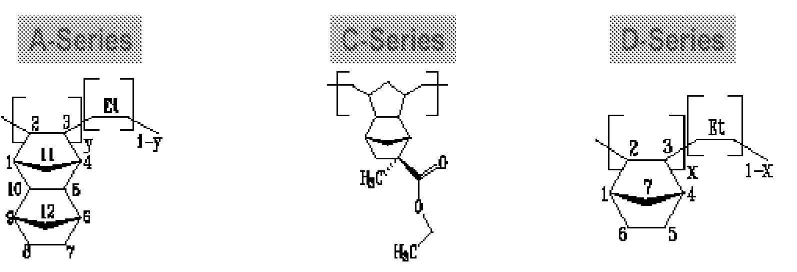

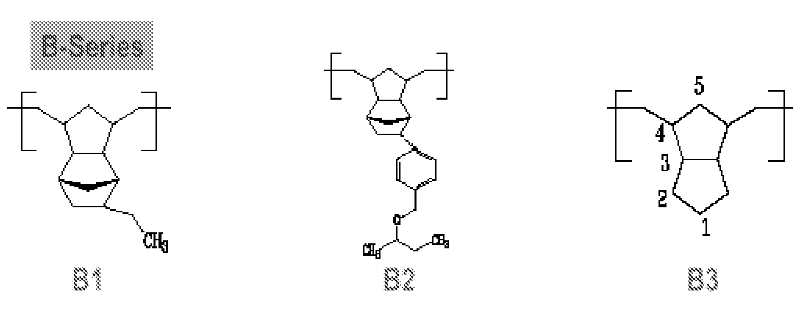

The present invention is also directed to a light stabilisation additive composition, comprising at least one ortho hydroxy tris-aryl triazine light absorber and at least one low molecular weight HALS having a molecular weight of less than about 500, and optionally at least one oligomeric HALS wherein the weight ratio of HALS to triazine light absorber is from about 3:1 to about 20:1, more preferably from about 7:1 to about 20:1 and to a light stabilisation additive concentrate, comprising from about 30 to about 98 percent, preferably from about 50 to about 95 percent, by weight of a cyclic olefin polymeric resin, at least one ortho hydroxy tris-aryl triazine light absorber and at least one low molecular weight HALS having a molecular weight of less than about 500, and optionally at least one oligomeric HALS wherein the weight ratio of HALS to triazine light absorber is from about 3:1 to about 20:1, more preferably from about 7:1 to about 20:1 where the concentrate may be in the form of pellets, prills, or pastilles. The additive composition may be formed by spraying solutions of the light absorber and HALS, melt blending, extrusion, or by physical compaction.

The present invention is further directed to a method of forming a stabilised polymeric article. The method comprises blending a polymeric material with from about 50 to about 5,000 ppm of at least one ortho hydroxy tris-aryl triazine light absorber and from about 500 ppm to about 1.25 percent of at least one oligomeric, polymeric, or high molecular weight HALS having a molecular weight of at least about 500, wherein the weight ratio of HALS to triazine light absorber is from about 3:1 to about 20:1, to form a
stabilised polymeric composition, and forming an extruded or molded article or a biaxially oriented tape or film from the stabilised polymeric composition.

### DETAILED DESCRIPTION OF THE INVENTION

The present invention is directed to compositions for stabilising polymeric materials, such as molded or extruded articles, biaxially oriented tapes and films, and coatings, to prevent degradation from exposure to UV light. It has been unexpectedly discovered that when from about 50 to about 5,000 ppm (parts per million) of an ortho hydroxy tris-aryl triazine and from about 500 ppm to about 1.25 percent of an low molecular weight HALS is blended with a cyclic olefin polymer material in a weight ratio of HALS to triazine of from about 1:1 to about 20:1, preferably from about 7:1 to about 10:1, the cyclic olefin polymer material is protected from exposure to UV Light for a period of time substantially greater than afforded by any prior art light stabiliser composition containing a HALS, a UV light absorber, or a combination thereof.

Suitable oligomeric HALS for use as the optional third component are oligomers of the type disclosed in U.S. Patent No. 4,331,586.

Oligomeric HALS useful in the invention include, but are not limited to oligomers of formula (I) 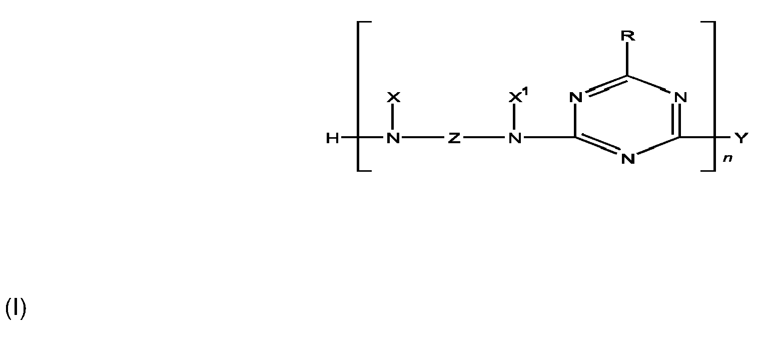 wherein R is morpholino, C₁-C₈ alkylamine, di(C₁-C₈) alkylamine, pyrrolidyl, or cyclohexylamino, and is preferably morpholino or octylamine, X and X¹, which are the same or different, represent hydrogen, C₁-C₂₀ alkyl, or the radical (II) 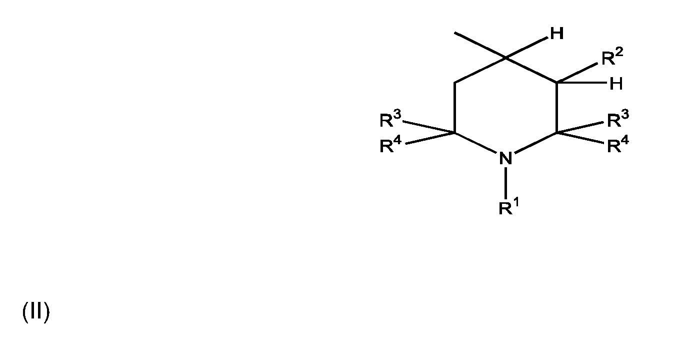 where R¹ represents hydrogen, C₂-C₃ hydroxyalkyl, C₁-C₈ alkyl, hydroxyl, or oxyl; R² represents hydrogen, C₁-C₈ alkyl, or benzyl; R³ and R⁴, which may be the same or different, represent C₁-C₈ alkyl, benzyl, or phenethyl, or together with the carbon to which they are attached form a C₅-C₁₀ cycloalkyl; Z represents C₂-C₂₀ straight chained or branched alkylene, where the alkylene chain may be interrupted by oxy, thio, or 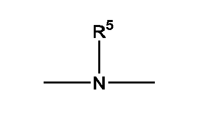 radicals, wherein R⁵ represents hydrogen, C₁-C₂₀ alkyl, or the radical (II); C₅-C₁₀ cycloalkylene, 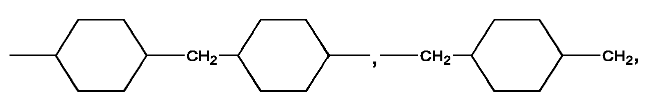 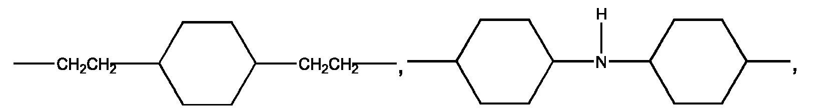 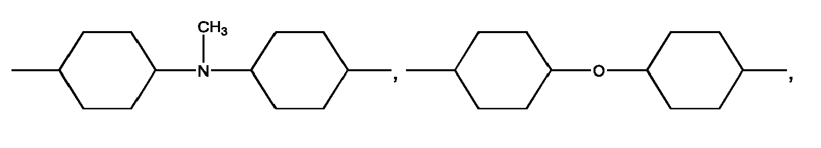 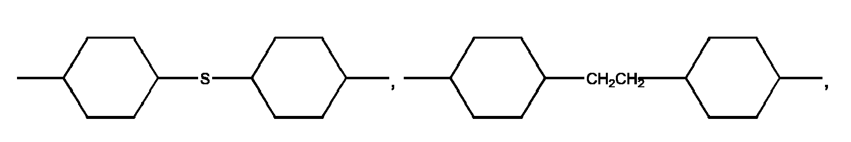 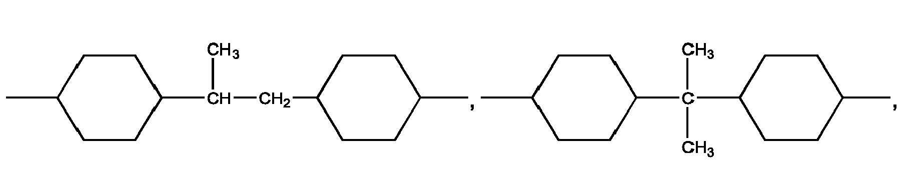 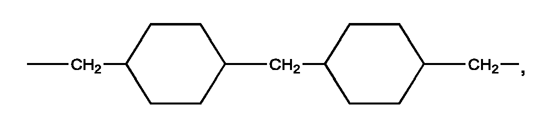 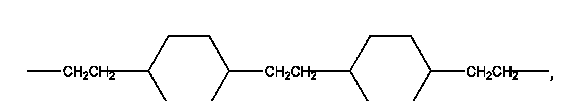 or 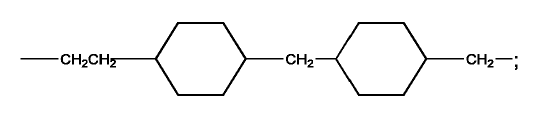 C₆-C₁₂ arylene, or C₈-C₁₄ aralkylene; n is an integer greater than 1; and, Y represents a halogen atom, C₁-C₈ alkylamine, di(C₁-C₈) alkylamine, pyrrolidyl, morpholino, or 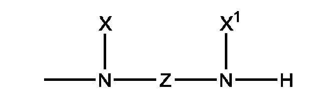 wherein X, X¹, and Z are as previously defined; with the proviso that at least one piperidinyl moiety of formula (II) is present in the repeating unit.

The preferred compositions of formula (I) are those wherein both X and X¹ are the moiety of formula (II). The especially preferred compositions of formula (I) are those wherein X and X¹ are 2,2,6,6-tetramethyl-4-piperidinyl, and Z is hexamethylene.

Useful oligomeric HALS are preferably those of claim 6.

Ortho hydroxy tris-aryl triazines useful in the present invention as UV light absorbers are of the type disclosed in U.S. Patent No. 4,619,956. Generally, the triazine light absorber of the invention is of the formula (III) 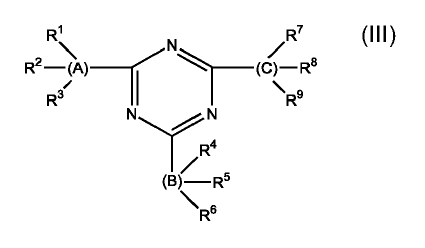 wherein 2 or three of A, B and C are each aromatic, at least one of A, B and C is substituted by a hydroxy group ortho of the point of attachment to the triazine ring, and each of R¹ through R⁹ is selected from the group consisting of hydrogen, hydroxy, alkyl, alkoxy, sulfonic, carboxy, halo, haloalkyl and acylamino.

Preferably, the triazine light absorber is of formula (IV) 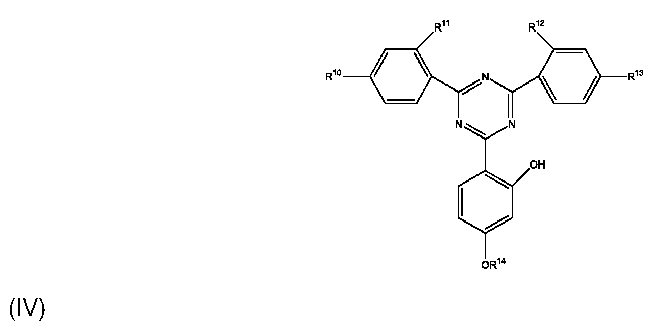 where R¹⁰, R¹¹, R¹² and R¹³ are as described above for R¹ to R⁹, and are most preferably H or CH₃, and R¹⁴ is hydrogen or C₁ to C₁₈ alkyl with hydrogen, C₆ alkyl, and C₈ alkyl being most preferred.

Typically, a COP article, such as a molded or extruded article or a biaxially oriented tape or film, may be stabilised in the present invention by blending from about 50 to about 2,000 ppm of the triazine light absorber of the invention and from about 250 to about 5000 ppm, based on the weight of the cyclic olefin material, of the low molecular weight HALS of the invention with a cyclic olefin polymeric material used to form the article. Optionally, from about 250 ppm to about 5000 ppm of an oligomeric HALS can be added. The ratio of total HALS to triazine light absorber is typically from about 20:1 to 10:1, preferably from about 10:1 1 to about 1:1, and most preferably from about 20:1 to about 7:1.

Although the low molecular weight HALS, optional oligomeric HALS and triazine light absorber of the invention may be added to the COP material individually during processing of the COP material by any means known in the art, a mixture of the two components may be formed prior to processing. Typically, the additive composition of the invention is formed into pellets, prills, or pastilles comprising the HALS and UV light absorbers of the invention. This may be accomplished by melting the HALS and the triazine together, and extruding the mixture, spraying solutions of the two components together to form pellets or prills of the mixture upon the evaporation of the solvent, or by physical compaction.

The light stabilisation additive composition of the invention may also be provided in the form of a concentrate containing from about 2 to about 70 percent, and preferably from about 5 to about 50 percent of the additive composition with the remainder comprising COP resin, and where the ratio of HALS to triazine light absorber is typically from about 20:1 to 1:1, preferably from about 10:1 to about 7:1.

Optionally, the compositions may contain other additives, especially additives such as antioxidants, supplemental light stabilisers, plasticizers, flame retardants, antistatic and antislipping agents, fillers, dyes, pigments, and the like.

Suitable antioxidants include those of the hindered phenol type, such as 2,6-di-t-butyl-p-cresol; 4,4'-bis(2,6-di-t-butylphenol); tetrakis-p[methylene(3,5-ditert-butyl)-4-hydroxy- hydrocinnamate)]methane; 1,3,5-tris(4-tert-butyl-3-hydroxy-2,6-dimethylbenzyl)--1,3,5- triazine-2,4,6-(1H,3H,5H)-trione; 1,3,5-tris(3,5-Di-tert-butyl--4-hydroxy benzyl)-s-triazine-2,4,6-(1H,3H,5H)-trione; tris(2,4-ditert-butylphenyl)phosphite; bis(2,4-di-t-butylphenyl)pentaerythritol diphosphite; 2[[2,4,8,10-tetrakis(1,1-dimethylethyl)dibenzo[d,f][1,3,2] dioxaphosphepin-6-yl]oxy]-N,N-bis[2[[2,4,8,10-tetrakis(1,1-dimethylethyl)dibenzo[d,f][1,3,2]dioxaphosphepin-6-yl]oxy] ethanamine; oxidised bis(tallow alkyl) amines; 4,4'-bis(2,6-diisopropylphenol); 2,4,6-tri-t-butylphenol; 2,2'-thiobis(4-methyl--6-t-butyl phenol); octadecyl 2(3',5'-di-t-butyl-4-'hydroxyphenyl)-propionate, etc.; esters of thiodipropionic acid, such as dilauryl thiodipropionate and distearyl thiodipropionate, etc.; hydrocarbyl phosphites, such as triphenyl phosphite, trinonyl phosphite, diisodecyl pentaerythritol diphosphate, diphenyldecyl phosphite, etc; and combinations thereof.

Suitable supplemental light stabilisers include those of the benzotriazole class, such as 2-(2'-hydroxy-5-t-octylphenyl)benzotriazole; 2(2'-hydroxy-3'-5'-di-t-butylphenyl)-5-chlorobenzotriazole; those of the hydroxybenzophenone type, such as 2-hydroxy-4-methoxybenzophenone; 2-hydroxy-4-octyloxybenzophenone; 2,2'-dihydroxy-4,4'-di-methoxybenzophenone; hindered phenol esters, such as n-hexadecyl 3,5-di-t-butyl-4-hydroxybenzoate, and -2'4'-di-t-butylphenyl 3,5-di-butyl-4-hydroxybenzoate; metal complexes of 2,2'-thiobis(4-t-octylphenol); nickel complexes of bis(4-t-octylphenyl)sulfone; nickel dibutyl dithiocarbamate; nickel salts of 4-hydroxy-3,-di-t-butylbenzyl phosphoric acid monoalkyl esters where alkyl is methyl, ethyl, propyl, butyl, etc; nickel complex of 2-hydroxy-4-methylphenyl undecyl ketone oxime, etc.

COP articles that may be protected from UV light with the present invention include, but are not limited to molded or extruded articles, coatings, tapes, and films. The articles may be formed by extrusion, sheet extrusion, injection molding, blow molding, injection blow molding, rotational or roto-molding, calendering, thermoforming, compression molding, vacuum molding, pressure molding, reaction injection molding, and other similar techniques known in the art. In addition, coatings may be applied by powder coating, extrusion coating, electrocoating, spraying, dipping, and other similar techniques known in the art.

### EXAMPLES

The following non-limiting examples are merely illustrative of the preferred embodiments of the present invention, and are not to be construed as limiting the invention, the scope of which is defined by the appended claims.

### Example

TOPAS 5013 (Ticona ) resin is dry blended with additives as specified in the table below. These dry blends are then fed directly into an injection molder (Arburg, location). The barrel temperature increased incrementally toward the nozzle from 240, 255, 265 and 275 °C. The temperature of the mold is 121 °C.

### Additive concentrations in the examples below.

| | UV-3346 | UV-3853 | UV-1164 |
|---|---|---|---|
| A | 2670 ppm | | 330 ppm |
| B | | 2655 ppm | 345 ppm |
| C | 1778 ppm | 1000 ppm | 222 ppm |
| D | | | |

Duplicate samples of the injection molded plaques are evaluated for initial color (L,a,b color scale) and haze (measured as % haze). These samples are then placed into a xenon arc weatherometer (Ci65, Atlas weatherometer) running ASTM G155 (AZ-dry) conditions. Samples are periodically removed from the weatherometer and the color and haze measured. The results are found in the Tables below.

**Table 1. Total color shift (Delta E) as a function of xenon arc weatherometer exposure.**

| | 400 h | 800 h | 1200 h | 1600 h | 2000 h |
|---|---|---|---|---|---|
| JV-3346+UV-1164 | 0.23 | 0.61 | 1.16 | 2.02 | 3.2 |
| JV-3853 + UV-1164 | 0.23 | 0.34 | 0.6 | 0.89 | 1.35 |
| JV-3346 + UV-3853 + UV-1164 | 0.23 | 0.29 | 0.34 | 0.51 | 0.79 |
| no UV | 0.95 | 3.22 | 6.09 | | |

**Table 2. Yellowness Index (YI) as a function of xenon arc weatherometer exposure.**

| | 400 h | 800 h | 1200 h | 1600 h | 2000 h |
|---|---|---|---|---|---|
| JV-3346+UV-1164 | 3.22 | 3.7 | 4.36 | 5.19 | 5.94 |
| JV-3853 + UV-1164 | 3.17 | 3.38 | 3.66 | 3.95 | 4.36 |
| JV-3346 + UV-3853 + UV-1164 | 3.01 | 3.11 | 3.35 | 3.54 | 3.77 |
| no UV | 3.94 | 6.34 | 9.75 | | |

**Table 3. Plaque clarity (% haze) as a function of xenon arc weatherometer exposure.**

| | 0 h | 800 h | 1600 h | 2000 h |
|---|---|---|---|---|
| JV-3346 + UV-1164 | 2.57 | 3.62 | 5.31 | 8.11 |
| JV-3853 + UV-1164 | 1.71 | 1.86 | 3.17 | 4.39 |
| JV-3346 + UV-3853 + UV-1164 | 1.36 | 2.05 | 2.8 | 3.72 |
| no UV | 2.51 | 8.51 | | |

While it is apparent that the invention disclosed herein is well calculated to fulfill the objects stated above, it will be appreciated that numerous modifications and embodiments may be devised by those skilled in the art. Therefore, it is intended that the appended claims cover all such modifications and embodiments that fall within the true spirit and scope of the present invention.

## Claims

1. A light stabilisation additive composition comprising at least one ortho-hydroxy tris-aryl triazine light absorber and at least one low molecular weight HALS having a molecular weight less than 500, wherein the weight ratio of HALS to triazine is from 1:1 to 20:1.

2. The light stabilisation additive composition of claim 1, further comprising an oligomeric HALS.

3. The light stabilisation additive composition of claim 1 wherein the ratio of HALS to triazine light absorber is from 3:1 to 10:1.

4. The light stabilisation additive composition of claim 2, wherein the oligomeric HALS is an oligomer of formula (I) 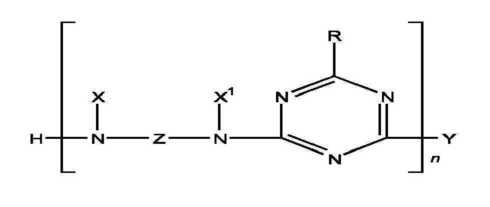 wherein R is morpholino, C₁-C₈ alkylamine, di(C₁-C₈) alkylamine, pyrrolidyl, or cyclohexylamine, X and X¹, which are the same or different, and are hydrogen, C₁-C₂₀ alkyl, or a radical of formula (II) 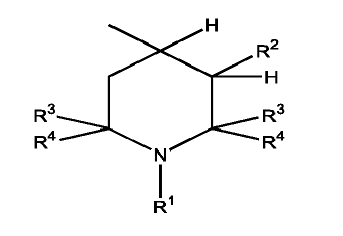 wherein R₁ represents hydrogen, C₂-C₃ hydroxyalkyl, C₁-C₈ alkyl, hydroxyl, or oxyl; R² represents hydrogen, C₁-C₈ alkyl, or benzyl; R³ and R⁴, are the same or different, and are C₁-C₈ alkyl, benzyl, or phenethyl, or form a C₅-C₁₀ cycloalkyl; Z is a straight chained or branched C₂-C₂₀ alkylene or a straight chained or branched C₂-C₂₀ alkylene chain interrupted by at least oxy, thio, or 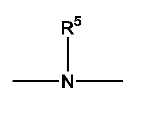 radical, wherein R⁵ is hydrogen, C₁-C₂₀ alkyl, or the radical of formula (II); C₅-C₁₀ cycloalkylene, 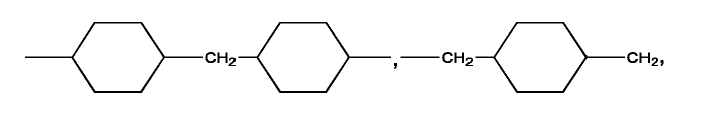 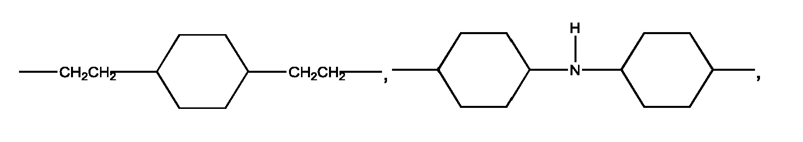 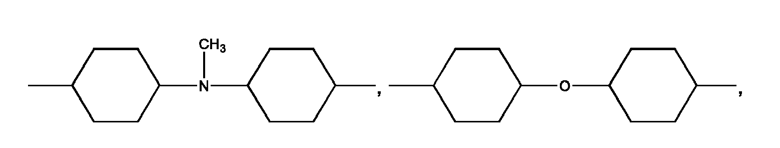 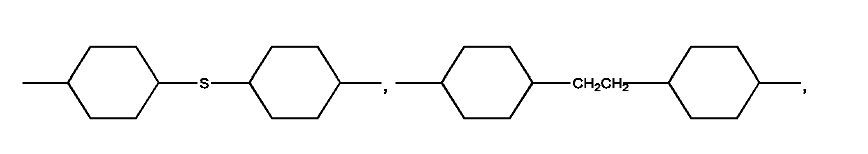 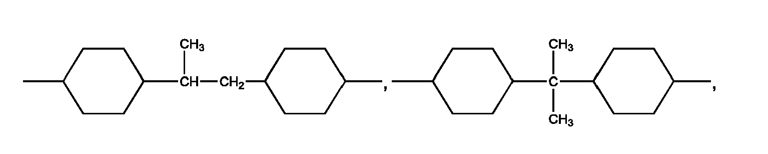 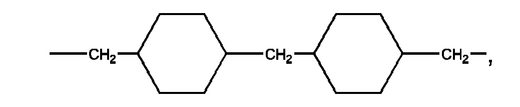 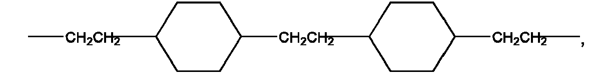 or 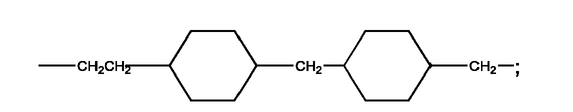 C₆-C₁₂ arylene, or C₈-C₁₄ aralkylene; n is an integer greater than 1; and Y is a halogen atom, C₁-C₈ alkylamine, di(C₁-C₈) alkylamine, pyrrolidyl, morpholino, cyclohexylamine, or 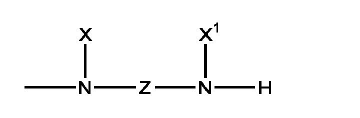 wherein X, X¹, and Z are as previously defined; with the proviso that at least one of X and X¹ is of formula (II).

5. The light stabilisation additive composition of claim 4, wherein X and X¹ are the same or different, and are of formula (II), wherein R is morpholino or octylamine, R¹ is H or CH₃, R² is H, R³ and R⁴ are CH₃, Z is C₆H₁₂, and Y is morpholino, octylamine, or 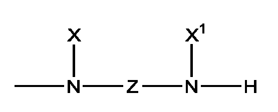 wherein X, X¹, and Z are as previously defined.

6. The light stabilisation additive composition of claim 2, wherein the oligomeric HALS is selected from the group consisting of bis(1-octyloxy-2,2,6,6,tetramethyl-4-piperdinyl)sebacate, dimethyl succinate polymer with 4-hydroxy-2,2,6,6-tetramethyl-1-piperidineethanol,
a blend of dimethyl succinate polymer with 4-hydroxy-2,2,6,6-tetramethyl-1-piperidineethanol and N,N'-bis(2,2,6,6-tetramethyl-4-piperidinyl)-1,6-hexane diamine,polymer with 2,4,6-trichloro-1,3,5-triazine and 2,4,4-trimethyl-1,2-pentamine,
1,3,5-triazine-2,4,6-triamine,N,N"'[1,2-ethanediylbis [[[(4,6-bis[butyl(1,2,2,6,6-pentamethyl-4-piperidinyl)amino]-1,3,5-triazine-2-yl]imino]-3,1 prop anediyl]]-bis[N'N"-dibutyl-N',N"-bis(1,2,2,6,6-pentamethyl-4-piperidinyl),
1,3,5-triazine-2,4,6-triamine,N,N"'[1,2-ethanediylbis [[[(4,6-bis[butyl(1-cyclohexyloxy-2,2,6,6--tetramethyl- 4-piperidinyl)amino]-1,3,5-triazine-2-yl]imino]- 3,1-propanediyl]]-bis[N'N"--dibutyl-N',N"-bis (1,2,2,6,6-pentamethyl-4-piperidinyl),
N,N'-bis(2,2,6,6-tetramethyl-4-piperidinyl)-1,6-hexane diamine, polymer with 2,4,6-trichloro-1,3,5-triazine and 2,4,4-trimethyl-1,2-pentamine,
poly-methylpropyl-3-oxy-(4(2.2.6.6-tetramethyl)piperidinyl) siloxane, poly-methylpropyl-3-oxy-(4(1,2.2.6.6-pentamethyl)piperidinyl)siloxane, polyalkyl-1-oxa-diazaspirodecane products of a reaction of tetramethyl-7-oxa-3,20-diaza-21-oxo-dispiro (5.1.11.12) heneicosane with epichlorohydrin, 1,3-propanediamine,N,N"-1,2-ethanediylbis-, polymer with 2,4,6-trichloro-1.3.5-triazine, reaction products with N-butyl-2,2,6,6-tetramethyl-4-piperidinamine.

7. The light stabilisation additive composition of claim 1 wherein the low molecular weight HALS is selected from 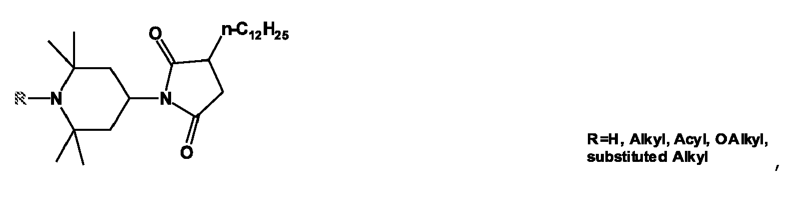 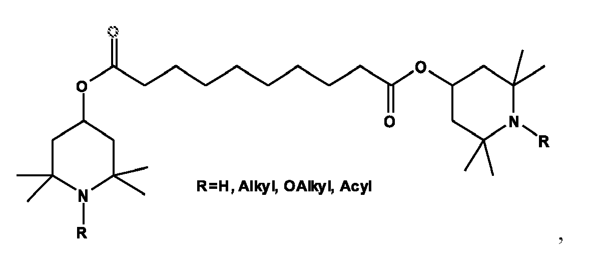 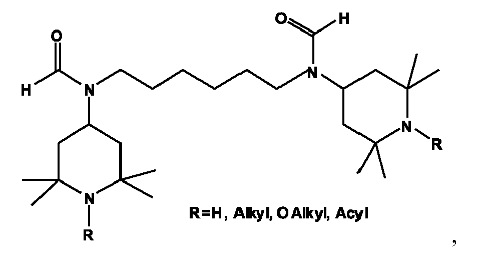 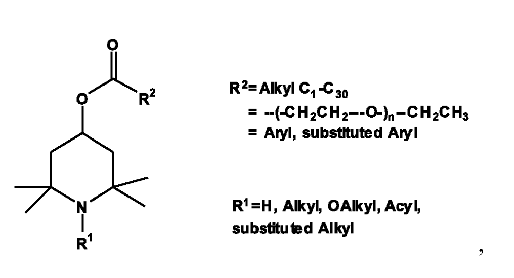 Bis(1-octyloxy-2,2,6,6,tetramethyl-4-piperdinyl)sebacate, and
dimethyl succinate polymer with 4-hydroxy-2,2,6,6-tetramethyl-1-piperidineethanol.

8. The light stabilisation additive composition of claim 1, wherein the triazine light absorber is of formula (III) 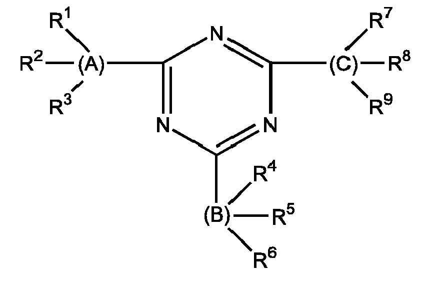 wherein 2 or 3 of A, B and C are aromatic, at least one of A, B and C is substituted by a hydroxy group ortho of the point of attachment to the triazine ring, and each of R¹ through R⁹ is selected from the group consisting of hydrogen, hydroxy, alkyl, alkoxy, sulfonic, carboxy, halo, haloalkyl and acylamino.

9. The light stabilisation additive composition of claim 8, wherein the triazine light absorber is of formula (IV) 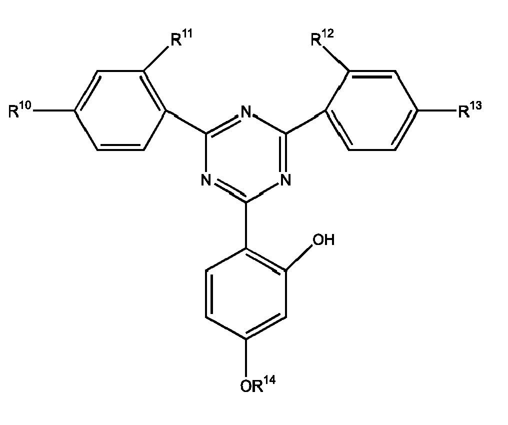 where R¹⁰, R¹¹, R¹² and R¹³ are the same or different, and are individually selected from the group consisting of hydrogen, hydroxy, alkyl, alkoxy, sulfonic, carboxy, halo, haloalkyl and acylamino, and R¹⁴ is hydrogen or C₁ to C₁₈ alkyl.

10. The light stabilisation additive composition of claim 9, wherein R¹⁰, R¹¹, R¹² and R¹³ H or CH₃, and R¹⁴ is hydrogen, C₆H₁₃, or C₈H₁₇.

11. The light stabilisation additive composition of claim 1, wherein the triazine light absorber is selected from the group consisting of 2-(4,6-diphenyl-1,3,5-triazine-2-yl)-5-(hexyl)oxy-phenol, 2-(4-((2-hydroxy-3-dodecyloxypropyl)-oxyl-2-hydroxyphenyl)-4,6-bis(2,4-dimethylphenyl)-1,3,5-triazine,
2-(4-((2-hydroxy-3-tridecyloxypropyl)-oxyl-2-hydroxyphenyl)-4,6-bis(2,4-dimethylphenyl)-1,3,5-triazine, and 2-(4-((2-hydroxy-3-isooctyloxyypropyl)-oxyl-2-hydroxyphenyl)-4,6-bis(2,4-dimethylphenyl)-1, 3,5-triazine.

12. A process for the preparation of the light stabilisation additive composition of any of the preceding claims, **characterised in that** the composition is formed by spray drying solutions of the ortho-hydroxy tris aryl triazine light absorber and HALS, by melt blending of the ortho-hydroxy tris aryl triazine light absorber and HALS, by extrusion of the ortho-hydroxy tris aryl triazine light absorber and HALS, or by physical compaction of the ortho-hydroxy tris aryl triazine light absorber and HALS.
